# EUROPEAN PATENT APPLICATION

(11) **EP 1 825 941 A2**
(43) Date of publication of application: **29.08.2007**
(21) Application number: 07003021.8
(22) Date of filing: 13.02.2007
(51) Int. Cl.: B23B 13/12, B23Q 7/04

(54) **Bar gripper for bar feeder**

(30) Priority: 24.02.2006 CN 200620003095 U
(71) Applicant: Barload Machine Co.,Ltd., Changhua City Chang hua County 500 (TW)
(72) Inventor: Lu, Fang-Chin, Taichung County 421 (TW)
(74) Representative: Becker Kurig Straus

(57) **Abstract**

A bar gripper (20) for use in a far feeder (10) for gripping a bar material (12) is disclosed to include a base frame (30), a first gripping member (40) mounted in the base frame (30), a second gripping member (50) mounted in and movable relative to the first gripping member (40), a gearwheel (60) meshed with a rack (426) at the first gripping member (40) and a rack (542) at the second gripping member (50) and rotatable to move the first gripping member (40) and the second gripping member (50) toward or away from each other so as to grip or release the bar material (12) disposed between the first gripping member (40) and the second gripping member (50).

## Description

### BACKGROUND OF THE INVENTION

### 1. Field of the Invention

The present invention relates generally to a bar feeder and more specifically, to a bar gripper for use in a bar feeder.

### 2. Description of the Related Art

When a bar feeder is used for sending a bar material into a lathe for processing, a bar gripper will be provided at the bar feeder for gripping the bar material so that a pushing device can be coupled to or detached from the bar material.

A bar gripper for this purpose is known comprising two gripping members pivotally connected together. During processing of a bar material, the two gripping members are biased relative to each other to grip the bar material so that the pushing device can be coupled to the bar material and driven to move the bar material into the lathe for processing.

However, because different bar materials having different diameters may be used, the operator must frequently adjust the clamping angle of the bar gripper to positively grip each feeding bar material. Further, because this design of bar gripper has a complicated structure and because the gripping members of the bar gripper have a big size, it is not easy to frequently and accurately adjust the clamping angle of the bar gripper subject to the diameter of each feeding bar material. If the bar gripper does not grip the bar material positively, the pushing device may not be able to accurately coupled to the bar material, such that a failure in operation will occur.

Therefore, it is desirable to provide a bar gripper that eliminates the aforesaid problem.

### SUMMARY OF THE INVENTION

The present invention has been accomplished under the circumstances in view. It is one objective of the present invention to provide a bar gripper for a bar feeder, which has a small size, and is convenient for use to grip a bar material positively without adjustment.

To achieve this objective of the present invention, the bar gripper installed in a bar feeder for gripping a bar material comprises a base frame, a first gripping member, a second gripping member and a transmission member. The first gripping member is mounted in the base frame and provided with a gripping portion and a coupling member. The second gripping member is mounted in and movable relative to the first gripping member. The second gripping member has a gripping portion facing the gripping portion of the first gripping member, and a coupling member. The transmission member is mounted in the second gripping member and coupled between the coupling member of the first gripping member and the coupling member of the second gripping member in such a manner that the gripping portion of the first gripping member and the gripping portion of the second gripping member can be synchronously moved toward or away from each other so as to grip or release the bar material disposed therebetween.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG 1 illustrates a bar gripper of a preferred embodiment of the present invention installed in a bar feeder;
FIG 2 is an exploded view of the bar gripper according to the preferred embodiment of the present invention;
FIG 3 is a perspective assembly view of the bar gripper according to the preferred embodiment of the present invention;
FIG 4 is a front view of the present invention, showing the status of the first gripping member and the second gripper member before gripping, and
FIG 5 is a front view of the present invention, showing that a bar material is clamped between the first gripping member and the second gripping member.

### DETAILED DESCRIPTION OF THE INVENTION

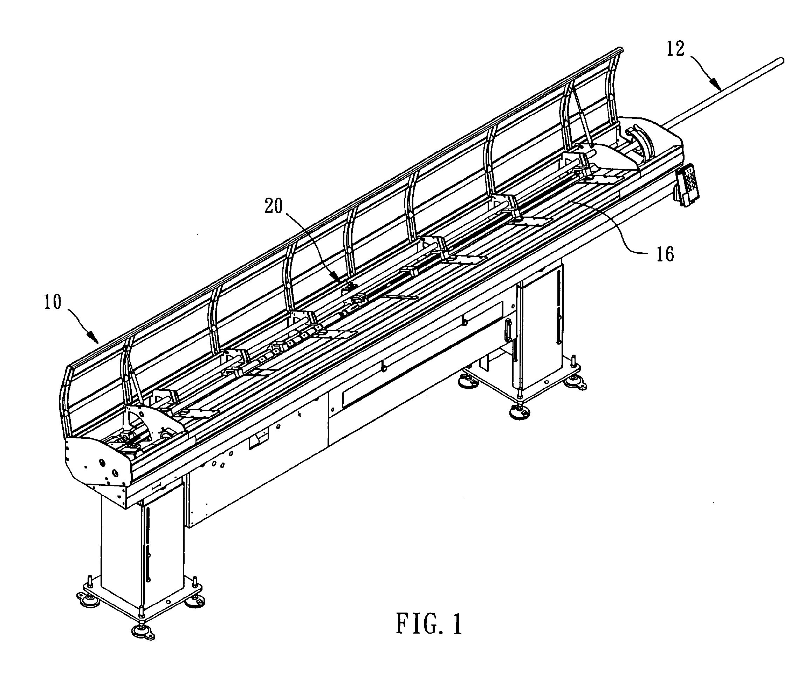

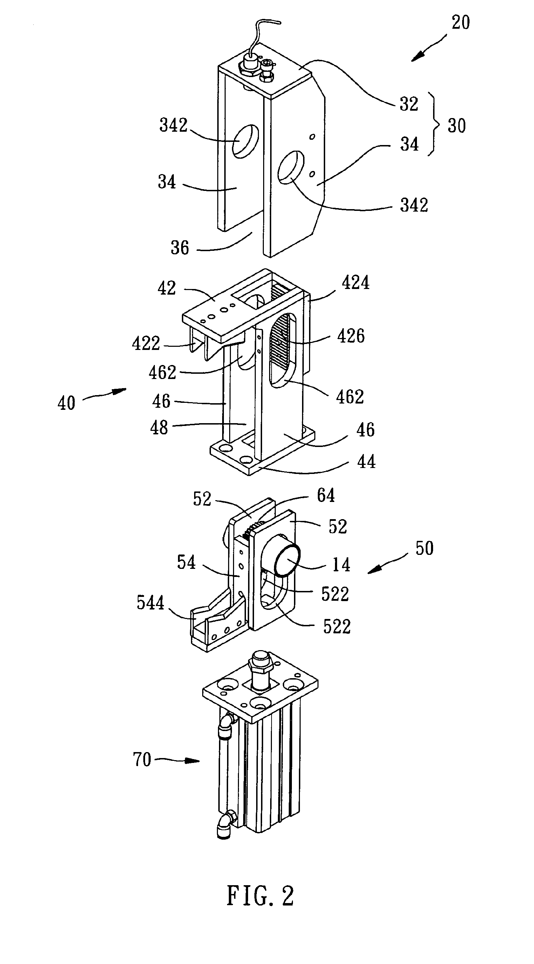

As shown in FIG 1, a bar gripper **20** of the present invention is used in a bar feeder **10** for gripping a bar material **12.** As shown in FIG 2, the bar gripper **20** comprises a base frame **30,** a first gripping member **40,** a second gripping member **50,** a transmission member **60,** and a driving device **70.**

The base frame **30** comprises a cover panel **32** and two side panels **34.** The cover panel **32** is fixedly connected to the top end of each of the side panels **34.** Therefore, the cover panel **32** defines with the two side panels **34** a receiving chamber **36.** Further, the two side panels **34** each have a round hole **342** on the middle. The two round holes **342** are axially aligned with respect to each other.

The first gripping member **40** is mounted in the receiving chamber 36 inside the base frame **30,** having a top panel **42,** a bottom panel **44,** and two parallel side panels **46.** The top panel **42** and the bottom panel **44** are respectively affixed to the top ends and bottom ends of the side panels **46.** Thus, the top panel **42,** the bottom panel **44** and the side panels **46** define an accommodation chamber **48.** The side panels **46** each have a longitudinal sliding slot **462** corresponding to the round holes **342** of the base frame **30.** The top panel **42** has a gripping portion **422** vertically downwardly extending from its front side, and a coupling member **424** vertically downwardly extending from its rear side. The coupling member **424** has a front side with its two lateral edges respectively affixed to the two parallel side panels **46.** Further, a rack **426** is formed on the front side of the coupling member **424.**

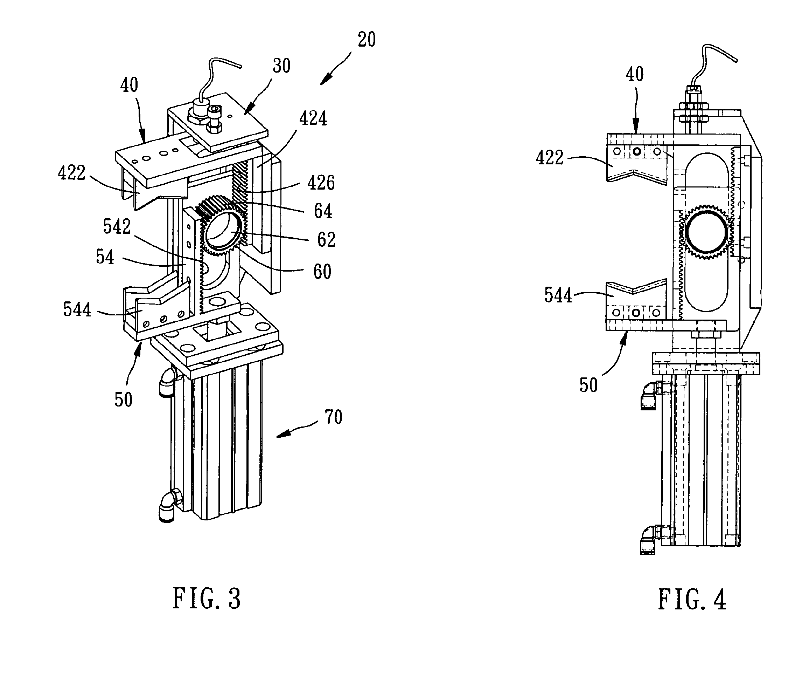

Referring to FIG 3, the second gripping member **50** is mounted in the accommodation chamber **48** of the first gripping member **40,** having two side panels **52.** The side panels **52** each have a longitudinal sliding slot **522** corresponding to the longitudinal sliding slots **462** of the side panels **46** of the first gripping member **40** and the round holes **342** of the side panels **34** of the base frame **30.** The second gripping member **50** further comprises a coupling member **54** vertically connected between the front sides of the side panels **52,** a rack **542** formed on the back side of the coupling member **54,** and a gripping portion **544** extending from the front side of the coupling member **54.** The gripping portion **544** of the second gripping member **50** and the gripping portion **422** of the first gripping member **40** face each other in vertical direction for gripping a bar material **12** that is inserted horizontally through the gap between the gripping portions **422** and **544.**

The transmission member **60** is a gearwheel mounted between the side panels **52** of the second gripping member **50,** having a center through hole **62** through its two opposite ends corresponding to the two round holes **342** of the base frame **30,** the longitudinal sliding slots **462** of the first gripping member **40** and the longitudinal sliding slots **522** of the second gripping member **50,** and a toothed periphery **64** meshed with the rack **426** of the first gripping member **40** and the rack **542** of the second gripping member **50.** One axle **14** of the bar feeder **10** is inserted through the round holes **342** of the base frame **30,** the longitudinal sliding slots **462** of the first gripping member **40,** the longitudinal sliding slots **522** of the second gripping member **50** and the through hole **62** of the transmission member **60.**

The driving device **70,** which is embodied as an air cylinder in this preferred embodiment, is connected to the second gripping member **50** and controllable to move the second gripping member **50** vertically relative to the first gripping member **40.**

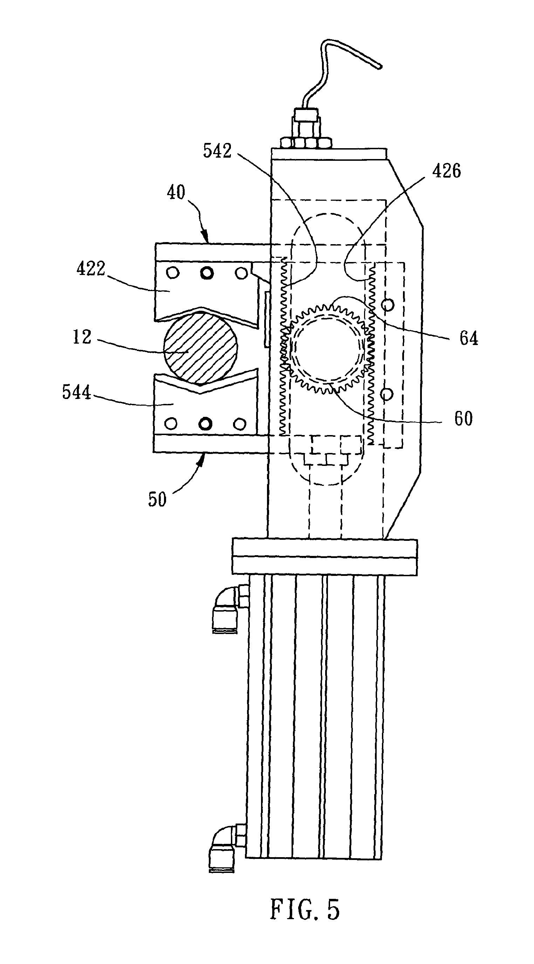

When a bar material **12** is moved from a bar loader 16 into one feeder tube of the bar feeder 10, the gripping portion **422** of the first gripping member **40** and the gripping portion **544** of the second gripping member **50** can be kept apart from each other at first, as shown in FIG 4. Thereafter, the driving device **70** is operated to move the second gripping member **50** upwards. At this time, as shown in FIG 5, the rack **542** of the second gripping member **50** is forced to rotate the transmission member **60,** thereby causing the transmission member **60** to move the rack **426** and the first gripping member **40** downwards, and therefore the gripping portion **422** of the first gripping member **40** and the gripping portion **544** of the second gripping member **50** are moved vertically toward each other to grip the bar material **12** positively for further processing process.

As stated above, the bar gripper **20** has a small size, and can conveniently operated to grip the bar material **12** without adjustment.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A bar gripper (20) for use in a bar feeder (10) for gripping a bar material (14), **characterized in that** the bar gripper (20) comprising:
a base frame (30);
a first gripping member (40) mounted in the base frame (40) and provided with a gripping portion (422) and a coupling member (424);
a second gripping member (50) mounted in and movable relative to the first gripping member (40), the second gripping member having a gripping portion (544) facing the gripping portion (422) of the first gripping member (40), and a coupling member (54); and
a transmission member (60) mounted in the second gripping member (50) and coupled between the coupling member (424) of the first gripping member (40) and the coupling member (54) of the second gripping member (50) in such a manner that the gripping portion (422) of the first gripping member (40) and the gripping portion (544) of the second gripping member (50) can be synchronously moved toward or away from each other so as to grip or release the bar material (12) disposed therebetween.

2. The bar gripper (20) as claimed in claim 1, **characterized in that** the bar gripper (20) further comprises a driving device (70) connected to the second gripping member (50) for moving the second gripping member (50) relative to the first gripping member (40).

3. The bar gripper (20) as claimed in claim 1, **characterized in that** the coupling member (424) of the first gripping member (40) is provided with a rack (426); the coupling member (54) of the second gripping member (50) is provided with a rack (542); the transmission member (60) is a gearwheel meshed between the rack (426) of the coupling member (424) of the first gripping member (40) and the rack (542) of the coupling member (54) of the second gripping member (50).

4. The bar gripper (20) as claimed in claim 1, **characterized in that** the transmission member (60) has a through hole (62) for the insertion of an axle (14) of the bar feeder (10).
